# EUROPÄISCHE PATENTANMELDUNG

(11) **EP 3 839 300 A1**
(43) Veröffentlichungstag der Anmeldung: **23.06.2021**
(21) Anmeldenummer: 19217010.8
(22) Anmeldetag: 17.12.2019
(51) Int. Cl.: F16J 15/34, F16J 15/36, F16J 15/447

(54) **GLEITRINGDICHTUNGSANORDNUNG, INSBESONDERE FÜR VERDRÄNGERMASCHINEN**

(71) Anmelder: EagleBurgmann Germany GmbH & Co. KG, 82515 Wolfratshausen (DE)
(72) Erfinder: BAUER, Johannes, 83646 Wackersberg (DE); PROEBSTL, Johannes, 82515 Wolfratshausen (DE)
(74) Vertreter: Hoefer & Partner Patentanwälte mbB

(57) **Zusammenfassung**

Die Erfindung betrifft eine Gleitringdichtung (1') mit einem rotierenden Gleitring (2) und einem stationären Gleitring (3), welche zwischen sich einen Dichtspalt (4) definieren, einen Basiskörper (9), an welchem der stationäre Gleitring (3) angeordnet ist, eine Innenhülse (5), eine topfförmige Außenhülse (6) mit einer zentralen Öffnung (61), wobei die zentrale Öffnung (61) einen umlaufenden Randbereich aufweist, wobei die Gleitringe (2, 3) zwischen der Innenhülse (5) und der Außenhülse (6) angeordnet sind, eine Labyrinthdichtung (7), welche zwischen dem Randbereich der zentralen Öffnung (61) und der Innenhülse (5) angeordnet ist, eine Lippendichtung (8), welche an dem Basiskörper (9) angeordnet ist und an einer Außenseite der Innenhülse (5) abdichtet, und eine dynamische Dichtung (10) und eine Vorspanneinrichtung (11), wobei die dynamische Dichtung (10) an einer Rückseite (20) des rotierenden Gleitrings (2) an der Innenhülse (5) angeordnet ist und der rotierende Gleitring in Axialrichtung (X-X) der Gleitringdichtungsanordnung axial beweglich angeordnet ist.

## Beschreibung

Die Erfindung betrifft eine Gleitringdichtungsanordnung, die insbesondere für Verdrängermaschinen, wie Roots-Gebläse oder Schraubenverdichter oder dgl., einsetzbar ist, sowie eine derartige Verdrängermaschine.

Gleitringdichtungsanordnungen sind aus dem Stand der Technik in unterschiedlichen Ausgestaltungen bekannt. Ein Beispiel zeigt die DE10 2016 200 818 A1, welche eine Gleitringdichtungsanordnung mit reduzierter Leckage zur Abdichtung eines Lagerraumes an einem rotierenden Bauteil zeigt. Die Gleitringdichtungsanordnung umfasst dabei als Vorspannelement einen Faltenbalg und zur zusätzlichen Abdichtung eine Lippendichtung. Bei einer Abdichtung von Kompressoren, welche insbesondere in Verdrängerbauart vorgesehen sind, ergibt sich im Betrieb jedoch das Problem von Druckstößen, welche in Axialrichtung auf die Gleitringdichtung wirken können. Von daher besteht die Gefahr, dass Druckstöße bis an den Dichtspalt zwischen den Gleitringen gelangen können und dadurch einerseits eine erhöhte Leckage auftreten kann und andererseits Verschmutzungen am Dichtspalt auftreten können, welche zu Beschädigungen an den Gleitflächen führen können.

Es ist Aufgabe der Erfindung vorliegenden Erfindung, eine Gleitringdichtungsanordnung und eine Verdrängermaschine mit Gleitringdichtung bereitzustellen, welche bei einfachem Aufbau und einfacher, kostengünstiger Herstellbarkeit axiale Druckstöße aufnehmen kann und eine hohe Dichtigkeit im Betrieb sowie lange Lebensdauer aufweist.

Diese Aufgabe wird durch eine Gleitringdichtungsanordnung mit den Merkmalen des Anspruchs 1 und eine Verdrängermaschine mit den Merkmalen des Anspruchs 13 gelöst. Die Unteransprüche zeigen bevorzugte Weiterbildungen der Erfindung.

Die erfindungsgemäße Gleitringdichtungsanordnung mit den Merkmalen des Anspruchs 1 weist den Vorteil auf, dass auftretende Druckstöße aus dem abzudichtenden Medienraum nicht bis zu einem Dichtspalt der Gleitringdichtung kommen. Derartige Dichtstöße treten insbesondere bei Roots-Gebläsen auf, da am Umfang der Kolben des Roots-Gebläses im Betrieb unterschiedliche Drücke herrschen, welche zu axialen Druckstößen führen können. Ferner weist die erfindungsgemäße Gleitringdichtung in Axialrichtung eine sehr kompakte Bauweise auf, sodass eine Axiallänge einer Welle, an welcher die Gleitringdichtungsanordnung abdichten soll, reduziert werden kann. Dies wird erfindungsgemäß dadurch erreicht, dass die Gleitringdichtungsanordnung eine Gleitringdichtung mit rotierendem und stationärem Gleitring aufweist, welche zwischen sich einen Dichtspalt definieren. Der stationäre Gleitring ist dabei an einem stationären Basiskörper angeordnet und der rotierende Gleitring an einer Innenhülse. Ferner ist eine topfförmige Außenhülse mit einer zentralen Öffnung vorgesehen, wobei die Öffnung einen inneren, umlaufenden Randbereich aufweist. Hierbei ist am Randbereich der zentralen Öffnung eine Labyrinthdichtung vorgesehen, welche zwischen dem Randbereich der Öffnung und der Innenhülse abdichtet. Weiterhin sind der Basiskörper und die Gleitringe der Gleitringdichtung in Radialrichtung zwischen der Innenhülse und der Außenhülse angeordnet. Ferner ist noch eine Lippendichtung vorgesehen, welche zwischen dem stationären Basiskörper und einer Außenseite er Innenhülse abdichtet. Somit sind gemäß der erfindungsgemäßen Gleitringdichtungsanordnung drei unterschiedliche Dichtungsarten in Axialrichtung hintereinander in Reihe geschaltet, nämlich, ausgehend vom abzudichtenden Raum, zuerst die Labyrinthdichtung, dann die Gleitringdichtung und abschließend die Lippendichtung. Auftretende Druckstöße werden somit einerseits von der topfförmigen Außenhülse aufgenommen und andererseits schon durch die Labyrinthdichtung in ausreichender Weise gedämpft. Weiterhin ist ein dynamischer O-Ring vorgesehen, welcher mittels einer Vorspanneinrichtung in Axialrichtung vorgespannt wird, wobei der dynamische O-Ring an einer Rückseite des rotierenden Gleitrings an der Innenhülse angeordnet ist. Auch dieser dynamische O-Ring dämpft zusätzlich möglicherweise auftretende axiale Druckstöße, sodass diese axialen Druckstöße nicht bis zum Dichtspalt zwischen dem rotierenden und stationären Gleitring gelangen können.

Weiter bevorzugt umfasst die Gleitringdichtungsanordnung einen Flansch an der Innenhülse 5, welcher radial nach außen vorsteht. Der Flansch weist einen äußeren Flanschdurchmesser D4 auf, welcher größer ist als ein Labyrinthdurchmesser D3 an einer Basis der Labyrinthdichtung. Die Basis der Labyrinthdichtung ist dabei der Bereich, von welchem Labyrinthzähne vorstehen. Der Flansch dient dabei insbesondere bei einer Montage und/oder Demontage als Abstützung und schützt die Labyrinthdichtung, da durch die Wahl der Durchmesser eine ausreichende Anlagefläche radial außerhalb der Labyrinthdichtung und insbesondere der empfindlichen Labyrinthzähne vorhanden ist.

Vorzugsweise ist ein Durchmesser D1 der Innenhülse an der Labyrinthdichtung gegenüber von Labyrinthzähnen kleiner oder gleich wie ein Durchmesser D5 der Innenhülse, an welchem die dynamische Dichtung angeordnet ist. Somit weist die Innenhülse wenigstens zwei unterschiedliche Durchmesser auf. Weiter bevorzugt ist der Durchmesser D1 an der Labyrinthdichtung an der Innenhülse kleiner als ein radial äußerer Durchmesser D2 des Dichtspalts zwischen dem rotierenden und dem stationären Gleitring. Durch diese Maßnahme wird eine Verschmutzung der Gleitflächen im Dichtspalt zwischen dem rotierenden und dem stationären Gleitring vermieden. Da der Durchmesser D1 des Labyrinths relativ klein ist, wird verhindert, dass Schmutzteilchen aus dem abzudichtenden Medienraum durch die Labyrinthdichtung in Richtung zur Gleitringdichtung gelangen. Aufgrund der Fliehkräfte im Betrieb werden Schmutzteilchen im abzudichtenden Medienraum tendenziell radial nach außen gedrückt und somit von der Labyrinthdichtung am radial inneren Bereich der topfförmigen Außenhülse wegbewegt.

Vorzugsweise umfasst die Vorspanneinrichtung wenigstens ein Vorspannelement, insbesondere eine Druckfeder, und einen Druckring, wobei die dynamische Dichtung, insbesondere ein dynamischer O-Ring, zwischen dem Druckring und einer Rückseite des rotierenden Gleitrings angeordnet ist.

Weiter bevorzugt umfasst die Gleitringdichtungsanordnung einen Mitnehmer zur Übertragung einer Rotation von der Innenhülse auf den rotierenden Gleitring. Der Mitnehmer kann beispielsweise mittels einer oder mehrerer Stiftschrauben an der Innenhülse fixiert sein. Zur Befestigung des Mitnehmers am rotierenden Gleitring sind beispielsweise Nuten im Gleitring vorgesehen, in welche am Mitnehmer angebrachte Arme eingreifen, um ein Drehmoment zu übertragen.

Die Innenhülse weist ferner bevorzugt den Flansch auf, um den Mitnehmer abzustützen. Dadurch ist eine sichere Positionierung des Mitnehmers auf der Innenhülse möglich.

Um einen möglichst kompakten Aufbau bereitzustellen, ist vorzugsweise die Vorspanneinrichtung in Axialrichtung zwischen einem Teil des Mitnehmers und einer Rückseite des rotierenden Gleitrings angeordnet. Dabei überspannt vorzugsweise ein weiterer Teilbereich des Mitnehmers auch die Vorspanneinrichtung und schützt diese vor Verschmutzung.

Weiter bevorzugt weist die Innenhülse eine radiale Anlagefläche an einem Axialende auf. Die radiale Anlagefläche ist eingerichtet, an einem rotierenden Bauteil, beispielsweise einem Drehkolben eines Roots-Gebläses anzuliegen. Dies hat den Vorteil, dass bei Axialbewegungen des rotierenden Bauteils, welche beispielsweise aufgrund von Temperaturänderungen und entsprechenden Ausdehnungen oder Verkürzungen des rotierenden Bauteils auftreten können, diese Axialbewegung des rotierenden Bauteils nicht unmittelbar auf die Gleitringdichtung übertragen wird. Somit schützt die Innenhülse weitere Bauteile der Gleitringdichtungsanordnung vor einer Belastung durch eine Axialkraft, welche durch die Bewegungen des rotierenden Bauteils ausgeübt werden können.

Weiter bevorzugt weist die Innenhülse, benachbart zur radialen Anlagefläche und radial nach innen gerichtet, eine Abschrägung auf. Hierdurch wird insbesondere eine Montage der Innenhülse auf ein rotierendes Bauteil, wie beispielsweise eine Welle, vereinfacht. An der Abschrägung ist weiter bevorzugt eine Ausnehmung vorgesehen, um eine statische Dichtung, vorzugsweise einen O-Ring, aufzunehmen. Die erste statische Dichtung ist dabei an einer Fläche zwischen der Abschrägung und der radialen Anlagefläche angeordnet.

Weiter bevorzugt weist die Innenhülse an einem Außenumfang eine Beschichtung auf. Die Beschichtung ist vorzugsweise an dem Bereich an der Innenhülse vorgesehen, an welchem die Vorspanneinrichtung, die dynamische Dichtung und der rotierende Gleitring angeordnet sind. Dadurch wird die Axialbeweglichkeit der Gleitringdichtung signifikant erhöht, sodass insbesondere Axialbewegungen der rotierenden Bauteile schnell und in kürzester Zeit ausgeglichen werden können. Dadurch wird eine Leckage aufgrund von möglichen Axialbewegungen vermieden bzw. minimal gehalten.

Weiter bevorzugt weist die topfförmige Außenhülse an einem Bodenbereich, welcher in Richtung zum abzudichtenden Medium angeordnet ist, einen Rücksprung auf. Hierdurch wird die Gefahr von sogenannten Anläufern, bei denen das rotierende Bauteil, beispielsweise ein Drehkolben eines Roots-Gebläses, die topfförmige Außenhülse berührt, minimiert.

Weiter bevorzugt ist die Gleitringdichtungsanordnung als vormontierbare Baugruppe ausgebildet, wobei am stationären Basiskörper eine Montagehilfsfläche vorgesehen ist, eingerichtet zur Fixierung einer Montagehülse. Dadurch kann die Gleitringdichtungsanordnung als vormontierte Einheit vormontiert werden und komplett auf ein rotierendes Bauteil, beispielsweise eine Welle, aufgebracht werden und an der Welle fixiert werden. Nach erfolgter Montage wird dann die Montagehülse entfernt.

Ferner betrifft die vorliegende Erfindung eine Verdrängermaschine, insbesondere ein Roots-Gebläse, umfassend eine erfindungsgemäße Gleitringdichtungsanordnung.

Nachfolgend wird ein bevorzugtes Ausführungsbeispiel der Erfindung unter Bezugnahme auf die begleitende Zeichnung im Detail beschrieben. In der Zeichnung ist
- Fig. 1: eine schematische Schnittansicht einer Gleitringdichtungsanordnung gemäß einem bevorzugten Ausführungsbeispiel der Erfindung und
- Fig. 2: eine schematische, vergrößerte Teilausschnittansicht der Gleitringdichtungsanordnung von Figur 1.

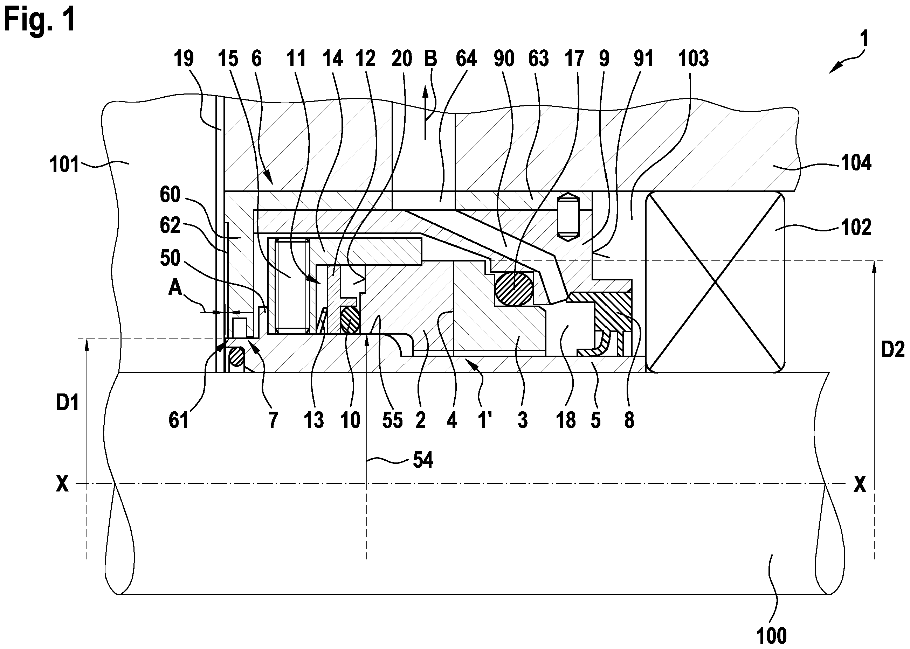

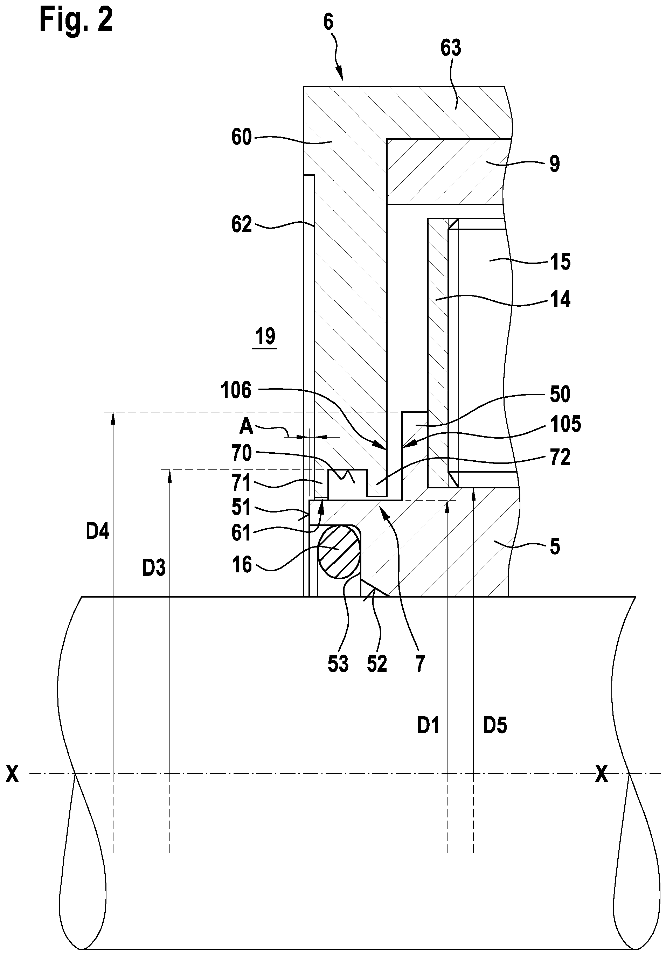

Die Figuren 1 und 2 zeigen eine Gleitringdichtungsanordnung 1 gemäß einem bevorzugten Ausführungsbeispiel der Erfindung.

Die Gleitringdichtungsanordnung 1 umfasst eine Gleitringdichtung 1' mit einem rotierenden Gleitring 2 und einem stationären Gleitring 3. Zwischen dem rotierenden Gleitring 2 und dem stationären Gleitring 3 ist ein Dichtspalt 4 definiert.

Die Gleitringdichtungsanordnung 1 umfasst ferner eine Innenhülse 5, welche zur Montage auf einem rotierenden Bauteil, in diesem Ausführungsbeispiel eine Welle 100, montiert ist, sowie eine topfförmige Außenhülse 6.

Die topfförmige Außenhülse 6 weist einen Bodenbereich 60 mit einer mittigen, zentralen Öffnung 61 auf. Ferner ist ein zylindrischer Mantelbereich 63 vorgesehen. Weiterhin ist am Bodenbereich 60, an der zu einem abdichtenden Medium gerichteten Seite, ein Rücksprung 62 ausgebildet.

Die Gleitringdichtungsanordnung 1 umfasst ferner eine Labyrinthdichtung 7 sowie eine Lippendichtung 8. Wie aus Figur 1 ersichtlich ist, sind die Labyrinthdichtung 7, die Gleitringdichtung 1' und die Lippendichtung 8 in Reihe auf der Innenhülse 5 angeordnet.

Dabei ist die Labyrinthdichtung 7 als in Axialrichtung X-X der Gleitringdichtungsanordnung erste Dichtung an einem abzudichtenden Raum 19 angeordnet. Die Gleitringdichtung ist in Axialrichtung zwischen der Labyrinthdichtung 7 und der Lippendichtung 8 angeordnet. Die Lippendichtung 8 dichtet einen Lagerölraum 103, welcher ein Lager 102 mit Lageröl versorgt, ab.

Figur 1 zeigt den eingebauten Zustand der Gleitringdichtungsanordnung 1 in einem Gehäuse 104, wobei die Gleitringdichtungsanordnung 1 auf der Welle 100 fixiert ist. An der Welle ist schematisch ferner noch ein Kolben 101 eines Roots-Gebläses dargestellt.

Die Gleitringdichtungsanordnung 1 umfasst ferner einen stationären Basiskörper 9, in welchem ein Leckageabfuhrkanal 90 ausgebildet ist. Der statische Basiskörper 9 umfasst ferner eine Montagehilfsfläche 91 an einer vom abzudichtenden Raum 19 abgewandten Seite.

Eine Vorspanneinrichtung 11 ist vorgesehen, um den rotierenden Gleitring 2, welcher auf der Innenhülse 5 axial beweglich angeordnet ist, vorzuspannen. Die Vorspanneinrichtung 11 umfasst hierbei einen Druckring 12 sowie ein Vorspannelement 13. Das Vorspannelement 13 ist in diesem Ausführungsbeispiel eine Zylinderfeder.

Wie aus Figur 1 ersichtlich ist, ist weiterhin ein Mitnehmer 14 vorgesehen, welcher mittels eines oder mehreren Stiften 15 auf der Innenhülse 5 fixiert ist. Der Mitnehmer 14 dient zur Drehmomentübertragung von der Innenhülse 5, welche mittels einer Presspassung auf der Welle 100 fixiert ist, auf den rotierenden Gleitring 2. Dabei weist der Mitnehmer 14 beispielsweise in Axialrichtung vorstehende Arme auf, welche in Nuten, die an einem Außenumfang des rotierenden Gleitrings 2 ausgebildet sind, eingreifen, um ein Drehmoment von der Innenhülse 5 über den Mitnehmer 14 auf den rotierenden Gleitring 2 zu übertragen.

Wie weiter aus Figur 1 ersichtlich ist, ist die Vorspanneinrichtung 11 in Axialrichtung zwischen dem Mitnehmer 14 und einer Rückseite 20 des rotierenden Gleitrings angeordnet.

Hierbei ist direkt an der Rückseite 20 des rotierenden Gleitrings 2 eine dynamische Dichtung 10 angeordnet. Die dynamische Dichtung 10 wird mittels der Vorspanneinrichtung 11 gegen die Rückseite 20 des rotierenden Gleitrings 2 vorgespannt und dichtet an der Innenhülse 5 ab. Die dynamische Dichtung 10 ist in diesem Ausführungsbeispiel ein O-Ring. Somit stützt sich das Vorspannelement 13 gegen den Mitnehmer 14 ab und übt eine Vorspannkraft über die Druckplatte 12 auf die dynamische Dichtung 10 aus.

Die Innenhülse 5 weist dabei an einem Außenumfang 54 eine Beschichtung 55 auf. Hierbei sind der rotierende Gleitring 2, die dynamische Dichtung 10, der Druckring 12 und das Vorspannelement 13 im Bereich der Beschichtung 55 angeordnet, um eine große axiale Beweglichkeit zu erreichen.

Wie insbesondere aus Figur 2 ersichtlich ist, weist die Innenhülse 5 an einem zum abzudichtenden Raum 19 gerichteten Ende eine Abschrägung 52 auf. Ferner ist an diesem zum abzudichtenden Raum 19 gerichteten Ende eine radiale Anlagefläche 51 an der Innenhülse 5 vorgesehen. Die radiale Anlagefläche 51 ist radial außerhalb der Abschrägung 52 angeordnet. Weiterhin ist eine Ausnehmung 53 an diesem axialen Ende vorgesehen, welche zwischen der radialen Anlagefläche 51 und der Abschrägung 52 angeordnet ist. In der Ausnehmung 53 ist dabei eine erste statische Dichtung 16 in Form eines O-Rings angeordnet.

Am stationären Gleitring 3 ist weiterhin eine zweite statische Dichtung 17, wie aus Figur 1 gezeigt, ebenfalls ein O-Ring angeordnet, welche den stationären Gleitring 3 gegenüber dem stationären Basiskörper 9 abdichtet.

Wie weiter aus Figur 2 ersichtlich ist, weist die Innenhülse 5 einen radial nach außen gerichteten Flansch 50 auf. Der Flansch 50 dient dabei zur Anlage des Mitnehmers 14, wie aus Figur 2 ersichtlich ist. Dadurch ist der Mitnehmer 14 auf einer exakten Position an der Innenhülse 5 positioniert.

Dieser Flansch 50 ist zugleich die Demontagestütze der Patronendichtung und ermöglicht ein beschädigungsfreies Demontieren der stationären sowie der rotierenden Dichtungseinheit in einem Stück. Dies wird bevorzugt dadurch erreicht, dass ein äußerer Flanschdurchmesser D4 größer als ein Labyrinthdurchmesser D3 an einer Basis 70 der Labyrinthdichtung 7 ist. Somit ist gewährleistet, dass ausreichend Auflagefläche oberhalb der filigranen Labyrinthzähne 71, 72 vorhanden ist, um die Kräfte der Demontage aufzunehmen. Beim Demontieren der Patronendichtung wird die topfförmige Außenhülse 6 soweit verschoben, bis eine Flanschfläche 105 gegen eine Bodenbereichsfläche 106 des Bodenbereichs 60 gedrückt wird. Die Bodenbereichsfläche 106 ist die Innenfläche der topfförmigen Außenhülse 6. Somit ist es möglich, die gesamte Gleitringdichtungsanordnung mit der Innenhülse 5 von der Maschinenwelle zu entfernen.

Wie weiter aus Figur 2 ersichtlich ist, ist an der zentralen Öffnung 61 der topfförmigen Außenhülse 6 die Labyrinthdichtung 7 vorgesehen. Die Labyrinthdichtung 7 umfasst eine Vielzahl von Zähnen 71, 72, welche in Figur 2 nur schematisch dargestellt sind. Die Labyrinthdichtung 7 ist dabei in radialer Richtung über der ersten statischen Dichtung 16 angeordnet.

Wie weiter aus den Figuren 1 und 2 ersichtlich ist, weist die Innenhülse 5 zwei unterschiedliche Außendurchmesser D1 und D5 auf. Am kleineren Außendurchmesser D1 (erster Durchmesser) ist dabei radial außerhalb die Labyrinthdichtung 7 angeordnet. Am größeren Außendurchmesser D5 ist die Beschichtung 55 und die dynamische Dichtung 10 vorgesehen.

Die im Ausführungsbeispiel beschriebene Gleitringdichtungsanordnung 1 ist besonders bevorzugt für ein Roots-Gebläse geeignet. Bei Roots-Gebläsen ergibt sich eine Problematik dahingehend, dass an einem Umfang eines Drehkolbens 101 des Roots-Gebläses unterschiedliche Drücke herrschen. Hierdurch kann es zu axialen Druckstößen mit entsprechenden axialen Kräften auf die Gleitringdichtungsanordnung 1 kommen. Auch kann sich nach einem Anfahren aufgrund von Temperaturänderungen eine axiale Ausdehnung von Bauteilen des Roots-Gebläses ergeben, welche auf Bauteile der Gleitringdichtungsanordnung eine Axialkraft ausüben können. Durch diese unerwünschten Axialkräfte auf die Gleitringdichtungsanordnung kann es zu Dichtigkeitsproblemen an der Gleitringdichtung kommen.

Durch den Rücksprung 62 an dem Bodenbereich 60 der topfförmigen Außenhülse 6 können jedoch die an dem Roots-Kolben auftretenden unterschiedlichen Drücke am Umfang des Roots-Kolbens ausgeglichen werden. Weiterhin verhindert die radiale Anlagefläche 51 an der Innenhülse, welche in Axialrichtung X-X um einen kleinen Abstand A in Richtung des rotierenden Bauteils 101 vorsteht, dass axiale Anläufer des Drehkolbens Auswirkungen auf die beiden Gleitringe der Gleitringdichtung haben.

Weiterhin ist die Labyrinthdichtung 7 auf einem ersten Durchmesser D1 angeordnet. Ein zweiter Durchmesser D2 bezeichnet einen radial äußersten Punkt des Dichtspalts 4 (vgl. Figur 1). Da der erste Durchmesser D1 deutlich kleiner als der zweite Durchmesser D2 ist und der erste Durchmesser D1 ungefähr dem Außendurchmesser der Innenhülse 5 entspricht, werden im Betrieb Schmutzteilchen, welche sich im Bereich des Drehkolbens 101 befinden, radial nach außen bewegt und gelangen erst gar nicht in den Innenbereich der Gleitringdichtungsanordnung 1. Wenn z.B. heißes Gas durch die Labyrinthdichtung 7 in den Innenbereich der Gleitringdichtungsanordnung 1 gelangt und eine gewisse Leckage über den Dichtspalt 4 bis zu einem Leckageraum 18 auftritt, welcher in Axialrichtung zwischen dem stationären Gleitring 3 und der Lippendichtung 8 vorhanden ist, wird diese Leckage über den Leckageabfuhrkanal 90 im stationären Basiskörper 9 abgeführt. Dies ist in Figur 1 durch den Pfeil B angedeutet. Hierbei weist die Außenhülse 6 wenigstens eine radiale Ausnehmung 64 zur Abführung der Leckage auf. Da das gasförmige abzudichtende Medium somit kontinuierlich aus dem Leckageraum 18 abgeführt werden kann, gelangt dieses auch nicht in den Lagerölraum 103. Ferner wird dadurch auch verhindert, dass sich das im Lagerölraum 103 befindliche Lageröl unzulässig erwärmt und somit das Lager 102 Schaden nehmen könnte.

Somit sind die Gleitringe 2, 3 durch die radiale Anlagefläche 51 an der Innenhülse 5 und dem Rücksprung 62 am Bodenbereich 60 der topfförmigen Außenhülse 6 von einer axial wirkenden Verspannung entkoppelt. Dadurch kann eine hohe Dichtheit der Gleitringdichtung sichergestellt werden.

Weiterhin stellt die am Außenumfang der Innenhülse 5 vorgesehene Labyrinthdichtung 7 eine effiziente Drosselung für Gase bereit. Sollten somit axiale Druckstöße im abzudichtenden Medium bis zur Labyrinthdichtung 7 reichen, können diese in ausreichender Weise in der Labyrinthdichtung 7 abgebaut werden. Dadurch ergibt sich eine signifikante Reduzierung von Druckstößen, welche einen im Bereich der Gleitringdichtungsanordnung 1 erreichen. Sollten trotzdem Druckstöße in den Innenbereich der Gleitringdichtungsanordnung 1 gelangen, können diese weiter durch die dynamische Dichtung 10 an der Rückseite 20 des rotierenden Gleitrings 2 aufgenommen werden. Somit können axiale Druckstöße hervorragend gedämpft werden.

### Bezugszeichenliste

- 1: Gleitringdichtungsanordnung
- 1': Gleitringdichtung
- 2: Rotierender Gleitring
- 3: Stationärer Gleitring
- 4: Dichtspalt
- 5: Innenhülse
- 6: topfförmige Außenhülse
- 7: Labyrinthdichtung
- 8: Lippendichtung
- 9: stationärer Basiskörper
- 10: dynamische Dichtung (dynamischer O-Ring)
- 11: Vorspanneinrichtung
- 12: Druckring
- 13: Vorspannelement
- 14: Mitnehmer
- 15: Stift
- 16: erste statische Dichtung
- 17: zweite statische Dichtung
- 18: Leckageraum
- 19: abzudichtender Raum
- 20: Rückseite des rotierenden Gleitrings
- 50: Flansch
- 51: radiale Anlagefläche der Innenhülse
- 52: Abschrägung
- 53: Ausnehmung
- 54: Außenumfang der Innenhülse
- 55: Beschichtung der Innenhülse
- 60: Bodenbereich
- 61: Zentrale Öffnung
- 62: Rücksprung
- 63: zylindrischer Mantelbereich
- 64: Ausnehmung
- 70: Basis
- 71, 72: Labyrinthzähne
- 90: Leckageabfuhrkanal
- 91: Montagehilfsfläche
- 100: Welle
- 101: rotierendes Bauteil/Roots-Kolben
- 102: Lager
- 103: Lagerölraum
- 104: Gehäuse
- 105: Flanschfläche
- 106: Bodenbereichfläche

- A: axialer Abstand zwischen radialer Anlagefläche und Rücksprung
- B: Leckageabfuhr
- D1: Durchmesser der Innenhülse an der Labyrinthdichtung (erster Durchmesser)
- D2: radialer äußerer Durchmesser des Dichtspalts (zweiter Durchmesser)
- D3: Labyrinthdurchmesser an der Basis 70 der Labyrinthdichtung (dritter Durchmesser)
- D4: äußerer Flanschdurchmesser (vierter Durchmesser)
- D5: Außendurchmesser der Innenhülse an der dynamischen Dichtung (fünfter Durchmesser)
- X-X: Axialrichtung

## Patentansprüche

1. Gleitringdichtungsanordnung, umfassend:
- eine Gleitringdichtung (1') mit einem rotierenden Gleitring (2) und einem stationären Gleitring (3), welche zwischen sich einen Dichtspalt (4) definieren;
- einen Basiskörper (9), an welchem der stationäre Gleitring (3) angeordnet ist,
- eine Innenhülse (5),
- eine topfförmige Außenhülse (6) mit einer zentralen Öffnung (61), wobei die zentrale Öffnung (61) einen umlaufenden Randbereich aufweist,
- wobei die Gleitringe (2, 3) und der Basiskörper zwischen der Innenhülse (5) und der Außenhülse (6) angeordnet sind,
- eine Labyrinthdichtung (7), welche zwischen dem Randbereich der zentralen Öffnung (61) und der Innenhülse (5) angeordnet ist,
- eine Lippendichtung (8), welche an dem Basiskörper (9) angeordnet ist und an einer Außenseite der Innenhülse (5) abdichtet, und
- eine dynamische Dichtung (10) und eine Vorspanneinrichtung (11), wobei die dynamische Dichtung (10) an einer Rückseite (20) des rotierenden Gleitrings (2) an der Innenhülse (5) angeordnet ist und der rotierende Gleitring in Axialrichtung (X-X) der Gleitringdichtungsanordnung axial beweglich angeordnet ist.

2. Gleitringdichtungsanordnung nach Anspruch 1, wobei ein äußerer Flanschdurchmesser (D4) eines Flansches (50) an der Innenhülse (5) größer als ein Labyrinthdurchmesser (D3) an einer Basis (70) der Labyrinthdichtung (7) ist.

3. Gleitringdichtungsanordnung nach Anspruch 1 oder 2, wobei ein Durchmesser (D1) der Labyrinthdichtung (7) an Labyrinthzähnen (71) kleiner ist als ein Durchmesser (D5) der Innenhülse (5), an welchem die dynamische Dichtung (10) angeordnet ist.

4. Gleitringdichtungsanordnung nach einem der vorhergehenden Ansprüche, wobei die Vorspanneinrichtung (11) ein Vorspannelement (13) und einen Druckring (12) umfasst, wobei die dynamische Dichtung (10) zwischen dem Druckring (12) und der Rückseite (20) des rotierenden Gleitrings (2) angeordnet ist.

5. Gleitringdichtungsanordnung nach Anspruch 4, ferner umfassend einen Mitnehmer (14) zur Übertragung eines Drehmoments von der Innenhülse (5) auf den rotierenden Gleitring (2) und den Druckring (12).

6. Gleitringdichtungsanordnung nach Anspruch 5, wobei sich der Mitnehmer (14) am Flansch (50) an der Innenhülse (5) abstützt.

7. Gleitringdichtungsanordnung nach Anspruch 5 oder 6, wobei die Vorspanneinrichtung (11) in Axialrichtung (X-X) zwischen einem Teil des Mitnehmers (14) und einer Rückseite (20) des rotierenden Gleitrings (2) angeordnet ist.

8. Gleitringdichtungsanordnung nach einem der vorhergehenden Ansprüche, wobei die Innenhülse (5) ferner eine radiale Anlagefläche (51) an einem zum abzudichtenden Raum gerichteten Ende aufweist.

9. Gleitringdichtungsanordnung nach einem der vorhergehenden Ansprüche, wobei die Innenhülse eine Abschrägung (52) an einem zum abzudichtenden Raum gerichteten Ende der Innenhülse aufweist.

10. Gleitringdichtungsanordnung nach Anspruch 9, wobei eine statische Dichtung (16) an einer Fläche zwischen der Abschrägung (52) und der radialen Anlagefläche (51) angeordnet ist.

11. Gleitringdichtungsanordnung nach einem der vorhergehenden Ansprüche, wobei die Innenhülse (5) eine Beschichtung (55) an einer radial gelegenen Außenseite aufweist.

12. Gleitringdichtungsanordnung nach einem der vorhergehenden Ansprüche, wobei die topfförmige Außenhülse (6) einen Bodenbereich (60) aufweist, an welchem an einer zum abzudichtenden Raum gerichteten Seite ein Rücksprung (62) ausgebildet ist.

13. Verdrängermaschine, insbesondere Roots-Gebläse, umfassend eine Gleitringdichtung nach einem der vorhergehenden Ansprüche.
